# EUROPÄISCHE PATENTANMELDUNG

(11) **EP 4 129 036 A1**
(43) Veröffentlichungstag der Anmeldung: **08.02.2023**
(21) Anmeldenummer: 22168355.0
(22) Anmeldetag: 14.04.2022
(51) Int. Cl.: A01B 69/00, A01D 41/127, G06T 7/70

(54) **LANDWIRTSCHAFTLICHE MASCHINE MIT KAMERAÜBERWACHTER KOMPONENTE**

(30) Priorität: 05.08.2021 DE 102021120368
(71) Anmelder: CLAAS Selbstfahrende Erntemaschinen GmbH, 33428 Harsewinkel (DE)
(72) Erfinder: Barther, Marvin, 33803 Steinhagen (DE); Neitemeier, Dennis, 59510 Lippetal (DE); Fischer, Frédéric, 59759 Arnsberg (DE); Heufekes, Maik, 48145 Münster (DE); Witte, Johann, 58730 Fröndenberg (DE)
(74) Vertreter: CLAAS Gruppe

(57) **Zusammenfassung**

Bei einer landwirtschaftlichen Maschine (1) mit einer Maschinenkomponente (2), einer auf die Maschinenkomponente (2, 3, 5, 11) ausgerichteten Kamera (12), einem Anzeigeschirm (18) und einer Bildverarbeitungseinheit (14), die mit der Kamera (12) und dem Anzeigeschirm (18) verbunden ist, um basierend auf von der Kamera (12) gelieferten Rohbildern Anzeigebilder der Maschinenkomponente (2, 3, 5, 11) anzuzeigen, ist die Bildverarbeitungseinheit (14) eingerichtet, ein synthetisches Bild (20, 22, 23, 24, 27, 28) der Maschinenkomponente (2, 3, 5, 11) zu erzeugen und das Anzeigebild durch Überlagern eines Rohbildes mit dem synthetischen Bild (20, 22, 23, 24, 27, 28) zu erhalten

## Beschreibung

Die vorliegende Erfindung betrifft eine landwirtschaftliche Maschine mit einer - vorzugsweise angetrieben beweglichen - Komponente und einer Kamera zum Überwachen dieser Komponente.

Aus EP 3 299 996 A1 ist eine solche landwirtschaftliche Maschine bekannt, die anhand von aus von der Kamera erzeugten Bilddatensätzen gesteuert wird. Um anhand von Bilddaten eine Betriebsgröße der Maschine steuern zu können, muss aus den Bilddaten zunächst ein Istwert einer Messgröße abgeschätzt werden, um diesem Istwert in einem Folgeschritt einen Sollwert der Betriebsgröße zuordnen zu können. Die Abschätzung des Istwertes ist mit einer Unsicherheit behaftet. Wenn diese Unsicherheit zu einem Fehler bei der Abschätzung führt, dann wird auch ein falscher Wert der Betriebsgröße festgelegt, und die Maschine arbeitet nicht ordnungsgemäß, ohne dass dies notwendigerweise sofort bemerkt wird. Insbesondere wenn die beobachtete Komponente durch aufgewirbelten Staub schlecht sichtbar ist, ist die Wahrscheinlichkeit von Fehlern bei der Bildauswertung erhöht. Solche Fehler können bei einer Erntemaschine zu einem erhöhten Anteil an Verunreinigungen im Erntegut führen und so den dafür erzielbaren Erlös empfindlich beeinträchtigen.

Wenn die überwachte Komponente selber beweglich ist, können Störungen der Bewegung der Komponente dazu führen, dass die Messgröße nicht mehr korrekt abgeleitet werden kann und deshalb ein unzweckmäßiger Sollwert der Betriebsgröße eingestellt wird. Auch dies ist für einen Fahrer der Maschine nicht immer erkennbar und kann bei einer Erntemaschine die Qualität des Ernteguts beeinträchtigen.

Aufgabe der vorliegenden Erfindung ist, eine landwirtschaftliche Maschine zu schaffen, die eine schnelle Erkennung solcher Fehlfunktionen ermöglicht.

Die Aufgabe wird gelöst, indem bei einer landwirtschaftlichen Maschine mit einer Maschinenkomponente, einer auf die Maschinenkomponente ausgerichteten Kamera, einem Anzeigeschirm und einer Bildverarbeitungseinheit, die mit der Kamera und dem Anzeigeschirm verbunden ist, um basierend auf von der Kamera gelieferten Rohbildern Anzeigebilder der Maschinenkomponente anzuzeigen, die Bildverarbeitungseinheit eingerichtet ist, ein synthetisches Bild der Maschinenkomponente zu erzeugen und das Anzeigebild durch Überlagern eines Rohbildes mit einem synthetischen Bild zu erhalten.

Sofern die Sichtbedingungen das Erkennen der realen Position überhaupt zulassen, kann ein Benutzer der Maschine, typischerweise ihr Fahrer, eine Abweichung zwischen einer realen Position der Maschinenkomponente und einer erwarteten Position sofort erkennen und ggf. Abhilfemaßnahmen treffen oder, falls dies nicht möglich ist, die Maschine stoppen, um zu verhindern, dass sie fehlerhaft arbeitet.

Wenn die Sichtbedingungen das Erkennen der realen Position nicht zulassen, ist die Darstellung der erwarteten Position aus anderem Grund nützlich: Sofern im Normalfall davon ausgegangen werden kann, dass die angezeigte Position die reale Position korrekt wiedergibt, kann sie als Hilfsmittel beim Navigieren der Maschine, insbesondere beim Umfahren eines Hindernisses, genutzt werden.

Um das synthetische Bild erzeugen zu können, ist die Bildverarbeitungseinheit vorzugsweise mit einem Speicher verbunden, in dem dreidimensionale Koordinaten der Maschinenkomponente gespeichert sind.

Die Kenntnis der Koordinaten in drei Dimensionen ermöglicht es der Bildverarbeitungseinheit zum einen, eine Bewegung der beweglichen Komponente relativ zum Fahrzeug bei der Erstellung des synthetischen Bildes zu berücksichtigen.

Zum anderen ermöglicht sie der Bildverarbeitungseinheit, das synthetische Bild jeweils passend zur Perspektive der Kamera zu erzeugen, unabhängig davon, wo diese an der Maschine angebracht und wie sie orientiert ist.

Um die Bewegung der beweglichen Komponente relativ zur Maschine berücksichtigen zu können, ist die Bildverarbeitungseinheit mit wenigstens einen Eingang zum Empfangen eines einen Istwert oder einen Sollwert spezifizierenden Positionsparameterwerts der Maschinenkomponente verbunden und ist eingerichtet, das synthetische Bild unter Berücksichtigung des Positionsparameterwerts zu erzeugen.

Zum Erfassen eines Istwerts kann der Eingang mit einem Sensor verbunden sein. Der Sensor kann an der beweglichen Komponente angebracht sein, um eine Positionskoordinate der Komponente zu überwachen. So entfällt die fehlerträchtige und rechenintensive Notwendigkeit, den Istwert aus den Bilddaten abzuleiten.

Alternativ kann der Eingang mit einer Steuereinheit der Maschinenkomponente verbunden sein, um einen an die Maschinenkomponente gesendeten Sollwert des Positionsparameters zu erfassen. So kommt es auch dann zu einer Diskrepanz zwischen dem realen Bild der Maschinenkomponente und deren synthetischen Bild, wenn die Bewegung der Maschinenkomponente gestört ist, und auch eine solche Störung kann von Benutzer schnell und zuverlässig erkannt werden.

Die Bildverarbeitungseinheit kann eingerichtet sein, in einem synthetischen Bild erste Pixel, die einen Teil der Maschinenkomponente wiedergeben, und zweite Pixel, die einem von der Maschinenkomponente verschiedenen Hintergrund entsprechen, zu unterscheiden, und das Anzeigebild zu erzeugen, indem die zweiten Pixel des synthetischen Bildes durch positionsgleiche Pixel des Rohbildes ersetzt werden. Mit anderen Worten ist das synthetische Bild an allen Pixeln, die nicht die Maschinenkomponente zeigen, transparent, so dass immer dann, wenn die reale Position der Maschinenkomponente mit der erwarteten übereinstimmt, diese im Anzeigebild vom synthetischen Bild verdeckt ist, und wenn beide nicht übereinstimmen, dies an einem Sichtbarwerden von Teilen der realen Maschinenkomponente deutlich wird.

Um eine Nichtübereinstimmung von realer und erwarteter Position der beweglichen Komponente deutlich erkennbar zu machen, kann die Maschinenkomponente im Anzeigebild in einer Kontrastfarbe dargestellt sein, die sich von der realen Farbe der Maschinenkomponente und vorzugsweise auch von der eines Hintergrundes unterscheidet, vor dem die bewegliche Komponente im Rohbild erscheint.

Die Bildverarbeitungseinheit kann ferner eingerichtet sein, wenigstens eine insbesondere linienförmige Abstandsmarke in ein Anzeigebild einzufügen, um einen Punkt der Umgebung zu markieren, der sich in einer vorgegebenen Entfernung von der Maschine befindet.

Gegenstand der Erfindung ist ferner ein Computerprogramm-Produkt mit Programmcode-Mitteln, die einen Computer befähigen, als eine Bildverarbeitungseinheit in der oben erwähnten landwirtschaftlichen Maschine zu arbeiten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine landwirtschaftliche Maschine mit einer Kamera und einer Maschinenkomponente gemäß der vorliegenden Erfindung;
- Fig. 2: ein Blockdiagramm von Steuerungskomponenten der landwirtschaftlichen Maschine, und
- Fig. 3: ein mit einer berechneten Darstellung der Maschinenkomponente überlagertes Bild.

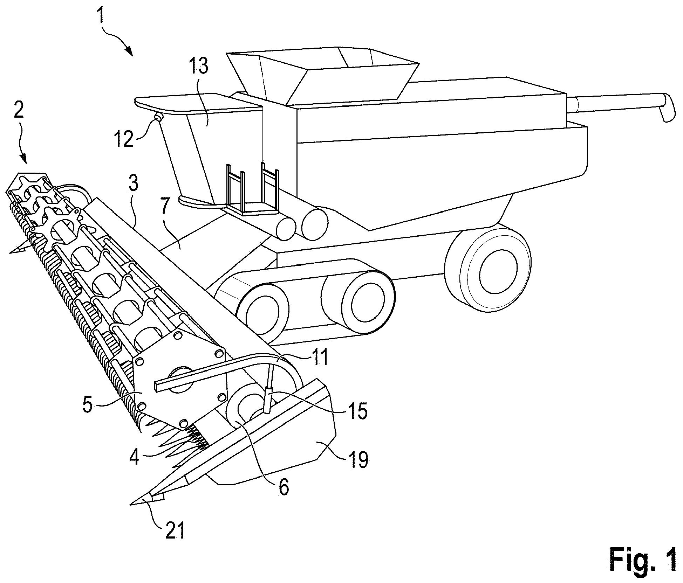

Fig. 1 zeigt einen Mähdrescher 1 als Beispiel einer landwirtschaftlichen Maschine, an der die Erfindung anwendbar ist. Als Beispiel einer relativ zum Mähdrescher 1 beweglichen Maschinenkomponente kann ein Erntevorsatz 2 oder auch eine Komponente des Erntevorsatzes 2 dienen, die, indem sie relativ zu einem Rahmen 3 des Erntevorsatzes 2 beweglich ist, auch relativ zum Mähdrescher 1 beweglich ist. Als eine solche Komponente des Erntevorsatzes 2 kommen etwa ein Messerbalken 4, eine Haspel 5 zum Einziehen von durch den Messerbalken 4 geschnittenem Erntegut in den Erntevorsatz 2 oder eine Querförderschnecke 6 in Betracht, die das eingezogene Erntegut zum Einlass eines Schrägförderers 7 schiebt, der von einer Rückseite des Erntevorsatzes 2 ausgeht und das Erntegut einem Dreschwerk im Innern des Mähdreschers 1 zuführt.

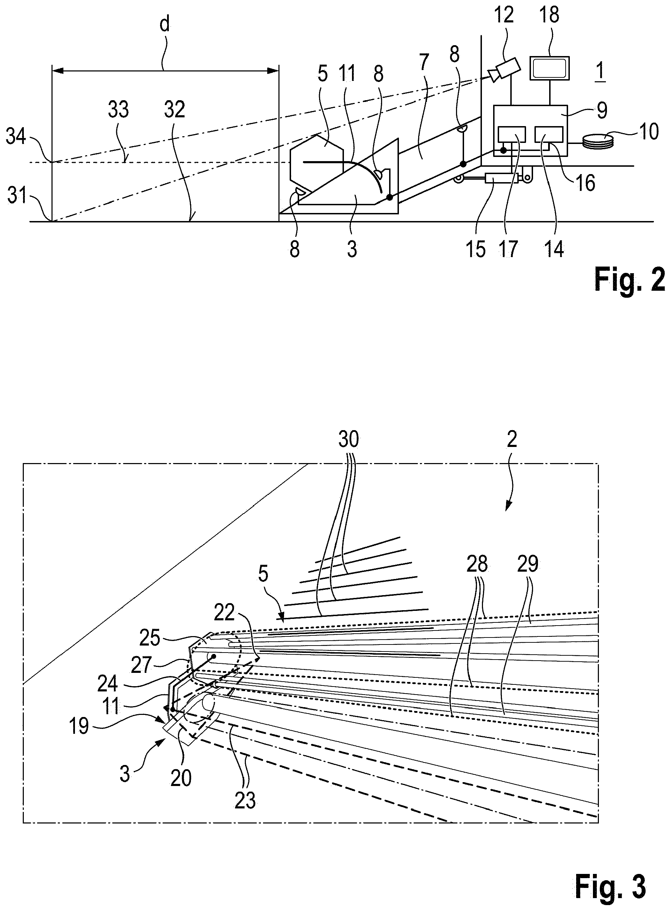

Der Schrägförderer 7 bildet zwischen dem Erntevorsatz 2 und dem Mähdrescher 1 ein Viergelenk mit horizontalen Achsen, das eine Bewegung des Erntevorsatzes 2 relativ zum Mähdrescher entlang einer bezogen auf die Fahrtrichtung des Mähdreschers 1 nach vorn steil ansteigenden Bahn ermöglicht. Weitere Freiheitsgrade des Erntevorsatzes 2 relativ zum Mähdrescher sind Freiheitsgrade der Nick- und der Rollbewegung. Diese Freiheitsgrade ermöglichen es dem Erntevorsatz 2, sich Bodenunebenheiten anzupassen und die Höhe über dem Boden, in der das Erntegut vom Messerbalken 4 gekappt wird, auch auf unebenem Boden im Wesentlichen konstant zu halten. Den Freiheitsgraden zugeordnete Sensoren 8, z.B. Drehwinkelgeber, sind, wie in der schematischen Darstellung der Fig. 2 gezeigt, mit einem Bordrechner 9 des Mähdreschers 1 verbunden.

Weitere Sensoren 8 sind den relativ zum Rahmen 3 beweglichen Komponenten des Erntevorsatzes 2 zugeordnet. Fig.2 zeigt exemplarisch einen Sensor 8 zum Erfassen der Stellung eines die Haspel 5 tragenden, gelenkig mit dem Rahmen 3 verbundenen Arms 11. Ein weiterer Sensor 8 ist vorgesehen, um die Drehstellung der Haspel 5 zu erfassen.

Ein Arbeitsspeicher 10 des Bordrechners 9 enthält ein dreidimensionales Modell des Erntevorsatzes 2, das es einer Bildverarbeitungseinheit 14 des Bordrechners 9 ermöglicht, aus Messdaten der Sensoren 8 Koordinaten von beliebigen Teilen des Erntevorsatzes in drei Dimensionen in einem in Bezug auf den Mähdrescher 1 ortsfesten Koordinatensystem zu berechnen.

Aufgrund des schematischen Charakters der Fig. 2 sind die Sensoren 8 dort jeweils in enger räumlicher Beziehung zu einem Teil des Erntevorsatzes 2 dargestellt, dessen Position zu erfassen sie vorgesehen sind. In der Praxis kann freilich ein Sensor 8 zur Erfassung der vertikalen Position des Rahmens 3 nicht nur an diesem oder wie in der Fig. angedeutet an dem Schrägförderer 7 angeordnet sein, sondern auch an einem eine Bewegung des Erntevorsatzes oder eines Teils davon antreibenden Stellglied 15, hier etwa einem Hydraulikzylinder, der zum Heben und Senken des Erntevorsatzes 2 an dem Schrägförderer 7 angreift. Ein weiteres Stellglied 15 zum Steuern des Arms 11 ist in Fig. 1 gezeigt.

Einer weiteren Alternative zufolge kann ein Eingang 16 der Bildverarbeitungseinheit 14 anstatt mit einem der Sensoren 8 mit einem Ausgang einer Steuereinheit 17 verbunden sein, um von dieser einen Sollwert der an dem betreffenden Stellglied einzustellenden Position zu empfangen.

Eine Kamera 12 ist in oder an einer Fahrerkabine 13 des Mähdreschers 1 montiert, um aus einer ähnlichen Perspektive wie der Fahrer auf den Erntevorsatz 2 zu blicken. Die Position der Kamera 12 und die Ausrichtung ihrer optischen Achse im Koordinatensystem des Mähdreschers 1 sind im Speicher 10 hinterlegt. Dadurch ist die Bildverarbeitungseinheit 14 in der Lage, die im Koordinatensystem des Mähdreschers 1 berechneten dreidimensionalen Koordinaten der diversen Teile des Erntevorsatzes 2 in zweidimensionale Koordinaten zu transformieren, an denen sich die entsprechenden Teile in einem von der Kamera 12 aufgenommenen Bild befinden müssten.

Auf diesem Wege erzeugt die Bildverarbeitungseinheit 14 zunächst ein synthetisches Bild, das den Erntevorsatz 2 schematisch an einer Position zeigt, an der er sich befinden müsste, wenn alle von den Sensoren 8 gelieferten Messdaten korrekt wären bzw. die Position des Erntevorsatzes oder eines Teils desselben exakt dem von der Steuereinheit 17 ausgegebenen und von der Bildverarbeitungseinheit 14 empfangenen Sollwert entspräche.

Nur ein Teil der Pixel des synthetischen Bildes zeigt tatsächlich den Erntevorsatz 2. Ein Großteil zeigt Hintergrund, der nicht zum Erntevorsatz 2 gehört. Die Bildverarbeitungseinheit 14 erzeugt ein Anzeigebild, indem sie diese Hintergrundpixel durch positionsgleiche Pixel eines aktuell von der Kamera 12 gelieferten Bildes ersetzt, und gibt es an einen Bildschirm 18 in der Fahrerkabine 13 aus.

Fig. 3 zeigt ein solches Anzeigebild. Die aus dem Rohbild der Kamera 12 übernommenen Hintergrundpixel zeigen ein Getreidefeld, auf dem sich der Mähdrescher 1 gegenwärtig bewegt. Das synthetische Bild des Erntevorsatzes 2 ist stark schematisiert, seine Teile sind in diesem überlagerten Bild ist jeweils als Strichgitter dargestellt, wobei Pixel in den Zwischenräumen zwischen Strichen wie die Pixel des Hintergrundes ebenfalls aus dem Rohbild übernommene Farb- und Helligkeitswerte haben. So ist etwa eine Seitenwand 19 des Erntevorsatzes in dem synthetischen Bild als ein Dreieck 20 schematisiert, dessen Ränder im Wesentlichen äußeren Kanten der Seitenwand 19 folgen und in dessen nicht ausgefüllten Innerem die Seitenwand 19 weitgehend sichtbar bleibt. Indem somit im Anzeigebild das dargestellte Teil des Erntevorsatzes 2 von seiner synthetischen Darstellung nicht vollständig verdeckt wird, wird einem Betrachter die Möglichkeit geboten, die Qualität des Rohbildes zu beurteilen und eine auf einer Auswertung des Rohbildes basierende automatische Steuerung außer Kraft zu setzen, wenn die Sichtbarkeit des Erntevorsatzes 2 - etwa wegen starker Staubentwicklung - schlecht ist und die Wahrscheinlichkeit hoch ist, dass ein anhand des Bildes von der Bildverarbeitungseinheit 14 abgeschätzter Parameterwert fehlerhaft sein würde.

Eine vordere Ecke 22 des Dreiecks 20 entspricht der Spitze eines Halmteilers 21 am vorderen Ende der Seitenwand 19. Obwohl diese Spitze in der Realität im Blickfeld von Fahrer und Kamera 12 durch eine Welle der Haspel 5 verborgen ist, erleichtert die Sichtbarkeit dieser Ecke 22 im Anzeigebild dem Fahrer, abzuschätzen, ob der aktuelle Kurs der Maschine 1 diese an einem voraus sichtbaren Hindernis vorbeiführen wird, oder ob ein Lenkmanöver nötig ist, um das Hindernis zu umfahren.

Falls die Kanten des Dreiecks 20 nicht mit den Rändern der Seitenwand 19 übereinstimmt, .dann stimmt offensichtlich die reale Stellung des Erntevorsatzes 2 nicht mit der von der Bildverarbeitungseinheit 14 erwarteten überein. Wenn die Erwartung auf dem Messwert eines Sensors 8 basiert, dann zwingt dies zu der Annahme, dass die Kopplung des an den Schrägförderer 7 fehlerhaft ist. Wenn sie auf einem empfangenen Sollwert einer von dem Stellglied 15 einzunehmenden Stellung basiert, dann kann der Grund auch darin liegen, dass das Stellglied den Sollwert aufgrund eines Defekts oder einer Blockade nicht erreichen kann. Im einen wie im anderen Fall ist die Nichtübereinstimmung zwischen den Positionen des Dreiecks 20 und der Seitenwand 19 im Anzeigebild klar ersichtlich, so dass der Fahrer, wenn er eine solche Nichtübereinstimmung beobachtet, den Betrieb der Maschine 1 umgehend beenden und für eine Behebung des Fehlers sorgen kann.

Der Rahmen 3 einschließlich seiner Seitenwand 19 ist grün lackiert und kontrastiert dadurch deutlich vom gelbbraunen Hintergrund des erntereifen Feldes. Das Dreieck 20 und andere, dem Verlauf einer Rückwand des Rahmens 3 folgende Linien 23 des synthetischen Bildes sind ebenfalls grün, allerdings mit einer deutlich vom Rahmen 3 abweichenden Helligkeit, um im Anzeigebild die Unterscheidung zwischen ihnen und dem Rahmen 3 zu erleichtern.

Zwei Linien 24 verdeutlichen im synthetischen Bild die erwartete Stellung des Arms 11. Da der Arm 1 relativ zum Rahmen 3 beweglich ist, ist für die Linien 24 eine andere Farbe gewählt als für das Dreieck 20 und die Linien 23, hier z. B. Gelb. Im Anzeigebild sind die Linien 24 auf ihrer gesamten Länge zu sehen, obwohl im Rohbild ein distales Ende des Arms 11 hinter einer Endplatte 25 der Haspel 5 verdeckt ist. So ist an einem Zusammenfallen des distalen Endes der Linien 24 mit dem Ende einer Welle 26 der Haspel 5 schnell und klar erkennbar, dass die reale Position des Arms 11 mit der erwarteten übereinstimmt.

Die Haspel 5 ist rot lackiert, daher ist auch ihre Darstellung im synthetischen Bild rot. Der Mittelpunkt eines Kreises 27, der im synthetischen Bild die Endplatte 25 repräsentiert, fällt zwar im Anzeigebild mit dem Mittelpunkt der Endplatte 25 und dem distalen Ende der Linien 24 zusammen, doch Linien 28, die in synthetischen Bild sich zwischen den Endplatten 25 axial erstreckende Stangen 29 repräsentieren, sind gegen letztere versetzt. Dieser Versatz zeigt, dass die erwartete und die reale Drehstellung der Haspel 5 nicht übereinstimmen, und dass folglich der Betrieb der Haspel 5 gestört sein muss.

Vor dem Erntevorsatz 2 ist im Anzeigebild auf dem Feld eine Mehrzahl von zur Fahrtrichtung senkrechten Linien 30 zu sehen. Diese Linien 30 entsprechen jeweils unterschiedlichen Entfernungen von der Vorderkante des Erntevorsatzes und ermöglichen somit eine exakte Abschätzung des Abstands zu vor der Maschine 1 liegenden Objekten. Eine Linie 30 kann im Anzeigebild jeweils so platziert sein, dass sie einen Streifen 31 der Feldoberfläche 32 (s. Fig 2) überdeckt, der sich in einem jeweils der Linie zugeordneten Abstand d vom Erntevorsatz 2 befindet. Dies ist sinnvoll, wenn der Pflanzenbestand vor dem Erntevorsatz 2 locker genug ist, um die Feldoberfläche 32 erkennen zu lassen, z.B. bei einem Bestand von Mais. Wenn der Pflanzenbestand so dicht ist, dass die Feldoberfläche 32 darunter verborgen ist, dem Bestand aber selber eine Oberfläche 33 zugeordnet werden kann, dann sollten die Linien 30 so platziert sein, dass der zugeordnete Abstand d der zwischen dem Erntevorsatz 2 und einem Streifen 34 an der Oberfläche 33 ist.

### Bezugszeichen

- 1: Mähdrescher
- 2: Erntevorsatz
- 3: Rahmen
- 4: Messerbalken
- 5: Haspel
- 6: Querförderschnecke
- 7: Schrägförderer
- 8: Sensor
- 9: Bordrechner
- 10: Arbeitsspeicher
- 11: Arm
- 12: Kamera
- 13: Fahrerkabine
- 14: Bildverarbeitungseinheit
- 15: Stellglied
- 16: Eingang
- 17: Steuereinheit
- 18: Bildschirm
- 19: Seitenwand
- 20: Dreieck
- 21: Halmteiler
- 22: Ecke
- 23: Linie
- 24: Linie
- 25: Endplatte
- 26: Welle
- 27: Kreis
- 28: Linie
- 29: Stange
- 30: Linie
- 31: Streifen
- 32: Feldoberfläche
- 33: Oberfläche
- 34: Streifen

## Patentansprüche

1. Landwirtschaftliche Maschine (1) mit einer Maschinenkomponente (2), einer auf die Maschinenkomponente (2, 3, 5, 11) ausgerichteten Kamera (12), einem Anzeigeschirm (18) und einer Bildverarbeitungseinheit (14), die mit der Kamera (12) und dem Anzeigeschirm (18) verbunden ist, um basierend auf von der Kamera (12) gelieferten Rohbildern Anzeigebilder der Maschinenkomponente (2) anzuzeigen, **dadurch gekennzeichnet, dass** die Bildverarbeitungseinheit (14) eingerichtet ist, ein synthetisches Bild (20, 22, 23, 24, 27, 28) der Maschinenkomponente (2, 3, 5, 11) zu erzeugen und das Anzeigebild durch Überlagern eines Rohbildes mit dem synthetischen Bild (20, 22, 23, 24, 27, 28) zu erhalten.

2. Landwirtschaftliche Maschine nach Anspruch 1, **dadurch gekennzeichnet, dass** die Bildverarbeitungseinheit (14) mit einem Speicher (10) verbunden ist, in dem dreidimensionale Koordinaten der Maschinenkomponente (2) gespeichert sind.

3. Landwirtschaftliche Maschine nach Anspruch 2, **dadurch gekennzeichnet, dass** die Bildverarbeitungseinheit (14) eingerichtet ist, anhand der dreidimensionalen Koordinaten der Maschinenkomponente (2) und von Koordinaten der Kamera (12) das synthetische Bild aus der Perspektive der Kamera (12) zu berechnen.

4. Landwirtschaftliche Maschine nach Anspruch 1, 2 oder 3, **dadurch gekennzeichnet, dass** die Bildverarbeitungseinheit (14) mit wenigstens einen Eingang (16) zum Empfangen eines einen Istwert oder einen Sollwert spezifizierenden Positionsparameterwerts der Maschinenkomponente (2) verbunden ist und eingerichtet ist, das synthetische Bild unter Berücksichtigung des Positionsparameterwerts zu erzeugen.

5. Landwirtschaftliche Maschine nach Anspruch 4, **dadurch gekennzeichnet, dass** der Eingang (16) mit einem Sensor (8) zum Erfassen eines Istwerts verbunden ist.

6. Landwirtschaftliche Maschine nach Anspruch 4, **dadurch gekennzeichnet, dass** der Eingang (16) mit einer Steuereinheit (17) der Maschinenkomponente (2) verbunden ist, um einen an die Maschinenkomponente (2) gesendeten Sollwert des Positionsparameters zu erfassen.

7. Landwirtschaftliche Maschine nach einem der vorhergehenden Ansprüche, **dadurch gekennzeichnet, dass** die Bildverarbeitungseinheit (14) eingerichtet ist, in einem synthetischen Bild (20, 22, 23, 24, 27, 28) erste Pixel, die einen Teil der Maschinenkomponente (2, 3, 5, 11) wiedergeben, und zweite Pixel, die einem von der Maschinenkomponente (2, 3, 5, 11) verschiedenen Hintergrund entsprechen, zu unterscheiden, und das Anzeigebild zu erzeugen, indem die zweiten Pixel des synthetischen Bildes durch positionsgleiche Pixel des Rohbildes ersetzt werden.

8. Landwirtschaftliche Maschine nach einem der vorhergehenden Ansprüche, **dadurch gekennzeichnet, dass** die Maschinenkomponente (2, 3, 11, 5) im synthetischen Bild (20, 22, 23, 24, 27, 28) in einer Kontrastfarbe dargestellt ist, die sich von der realen Farbe der Maschinenkomponente (2, 3, 11, 5) unterscheidet.

9. Landwirtschaftliche Maschine nach einem der vorhergehenden Ansprüche, **dadurch gekennzeichnet, dass** die Bildverarbeitungseinheit (14) eingerichtet ist, wenigstens eine insbesondere linienförmige Abstandsmarke (30) in ein Anzeigebild einzufügen, um in dem Anzeigebild einen Punkt der Umgebung zu markieren, der sich in einer vorgegebenen Entfernung von der Maschine (1) befindet.

10. Computerprogramm-Produkt mit Programmcode-Mitteln, die einen Computer befähigen, als Bildverarbeitungseinheit in einer landwirtschaftlichen Maschine nach einem der Ansprüche 1 bis 8 zu arbeiten.
